# EUROPEAN PATENT SPECIFICATION

(11) **EP 4 296 528 B1**
(45) Date of publication and mention of the grant of the patent: **09.09.2026**
(21) Application number: 22756310.3
(22) Date of filing: 18.02.2022
(51) Int. Cl.: F16C 33/58, F16C 33/66, F16C 19/44, F16C 33/62, F16C 33/64

(54) **METHOD OF APPLYING AN OIL REPELLENT TREATMENT TO A THRUST NEEDLE ROLLER BEARING**
VERFAHREN ZUM AUFBRINGEN EINER ÖLABWEISENDEN BEHANDLUNG AUF EIN AXIALNADELLAGER
PROCÉDE D'APPLICATION D'UN TRAITEMENT OLÉOFUGE À UNE BUTÉE À AIGUILLES

(30) Priority: 19.02.2021 JP 2021025449; 26.01.2022 JP 2022010302
(43) Date of publication of application: 27.12.2023
(73) Proprietor: NSK Ltd., Tokyo 141-8560 (JP)
(72) Inventor: SATO Tsutomu, Fujisawa-shi, Kanagawa 251-8501 (JP); RADZI Faidhi, Fujisawa-shi, Kanagawa 251-8501 (JP); UYAMA Hideyuki, Fujisawa-shi, Kanagawa 251-8501 (JP)
(74) Representative: Grünecker Patent- und Rechtsanwälte PartG mbB
(86) International application number: PCT/JP2022/006789
(87) International publication number: WO 2022/176993

(56) References cited:
- JP-A- 2006 153 028
- JP-A- 2008 256 197
- JP-A- 2009 121 532
- JP-A- 2009 121 532
- JP-A- 2012 122 502

## Description

### TECHNICAL FIELD

The present invention relates to a method of applying an oil repellent treatment to a thrust needle roller bearing. JP 2009 121532 A relates to a rolling bearing for high speed including an inner ring and an outer ring, a plurality of rolling elements, and a seal member for covering an opening of a space between the inner and outer rings, wherein grease is enclosed around the rolling elements and a water-repellent and oil-repellent coating film is formed at least on a part of an inner surface of a bearing in contact with the grease.

### BACKGROUND ART

In the automobile field, for the improved fuel efficiency of automobiles, the electrification, miniaturization, and high speed operation are in progress. Along with this, in bearings, lubricating oil instead of grease is charged, or lubricating oil is applied to rolling elements and raceway surfaces to reduce torque. Furthermore, in order to reduce loss due to lubricating oil, efforts are made to reduce the amount of lubricating oil.

However, as the amount of lubricating oil decreases, there is a concern that damage such as seizure occurs due to a lack of lubricating oil. When the bearing is rotated at high speed, the lubricating oil lubricating the rolling elements and the raceway surface is moved to the outside due to centrifugal force. Therefore, when the supply is interrupted or the amount of supplied oil is small, the amount of lubricating oil gradually decreases, eventually causing seizure.

Therefore, for example, Patent Literature 1 discloses a technique relating to a bearing device in which, on an outer peripheral surface of an inner ring and an inner peripheral surface of an outer ring, an oil repellent coating is formed in a first region P1 and a second region P2 except for rotating raceway grooves and stationary raceway grooves.

### CITATION LIST

### PATENT LITERATURE

Patent Literature: JP2017-125550A

### SUMMARY OF INVENTION

### TECHNICAL PROBLEM

Meanwhile, in addition to being applied to transmissions of automobiles and industrial construction machinery, the thrust needle roller bearings are widely used in other rotating equipment and suitably used for highspeed rotation applications. However, because sealing members such as seals cannot be used in the thrust needle roller bearings due to structural restrictions, and centrifugal force tends to cause lubricating oil to leak out of the bearings, there is a problem that seizure is particularly likely to occur in an environment where the amount of lubricating oil is small.

Accordingly, an object of the present invention is to prevent seizure in a thrust needle roller bearing, by holding an amount of lubricating oil even in an environment where the amount of lubricating oil is small.

### SOLUTION TO PROBLEM

The object of the present invention is achieved by a method according to the appended claim.

### ADVANTAGEOUS EFFECTS OF INVENTION

According to the present invention, since the portion of the annular raceway surface of the bearing ring other than the portion in contact with the needle rollers is subjected to oil repellent treatment, even when the lubricating oil held between the raceway surface and the needle rollers tends to move to the outside of the bearing due to centrifugal force, the lubricating oil can be blocked by the portion subjected to the oil repellent treatment, and prevented from moving further. Therefore, even in a thrust needle roller bearing with a reduced amount of oil, a sufficient amount of oil is held, and seizure can be effectively prevented.

### BRIEF DESCRIPTION OF DRAWINGS

FIG. 1 is a partially cutaway perspective view of a thrust needle roller bearing.
FIG. 2 is a diagram illustrating a method for subjecting oil repellent treatment to a raceway surface of a bearing ring not falling under the scope of the present invention.
FIG. 3 is a diagram illustrating a method for subjecting the oil repellent treatment to the raceway surface of the bearing ring according to an embodiment of the present invention.
FIG. 4 is a graph showing a result of plotting cumulative failure probability (%) versus lifespan (hours) for an Example product and a Comparative Example product shown in Example 1.
FIG. 5 is a graph showing a result of plotting cumulative failure probability (%) versus lifespan (hours) for an Example product and a Comparative Example product shown in Example 2.
FIG. 6 is a graph showing a lifespan of each bearing.
FIG. 7 is a graph showing an average lifespan of each test material, with the average lifespan plotted on a vertical axis and an average contact angle with VG32 turbine oil plotted on a horizontal axis.

### DESCRIPTION OF EMBODIMENTS

Hereinafter, The present invention will be described in detail with reference to the drawings.

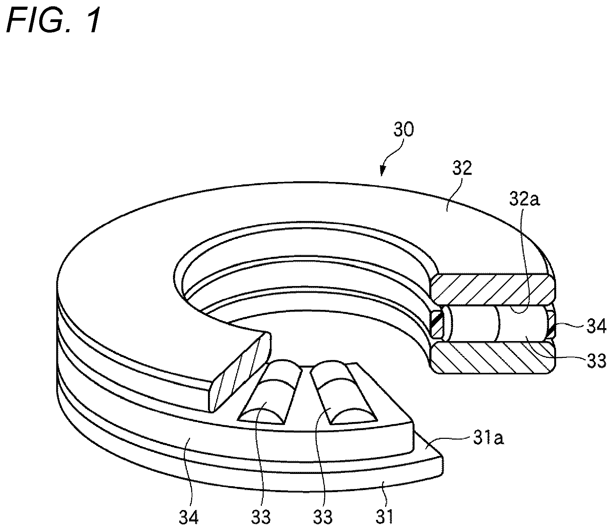

FIG. 1 is a partially cutaway perspective view of a structure of a thrust needle roller bearing. As shown in the drawing, a thrust needle roller bearing 30 includes an annular stationary bearing ring 31 and a rotating bearing ring 32 facing each other, a plurality of needle rollers 33 rollably (freely rollably) arranged between these bearing rings, and a cage 34 that rollably (freely rollably) holds the needle rollers 33.

In the present embodiment, in at least one, or preferably, in both of a raceway surface 31a of the stationary bearing ring 31 and a raceway surface 32a of the rotating bearing ring 32, portions of the raceway surfaces 31a and 32a other than portions in contact with the needle rollers 33 are subjected to oil repellent treatment (not shown). More specifically, in the present embodiment, both a radially outer portion and a radially inner portion from the portions of the raceway surfaces 31a and 32a in contact with the needle rollers 33 are subjected to the oil repellent treatment.

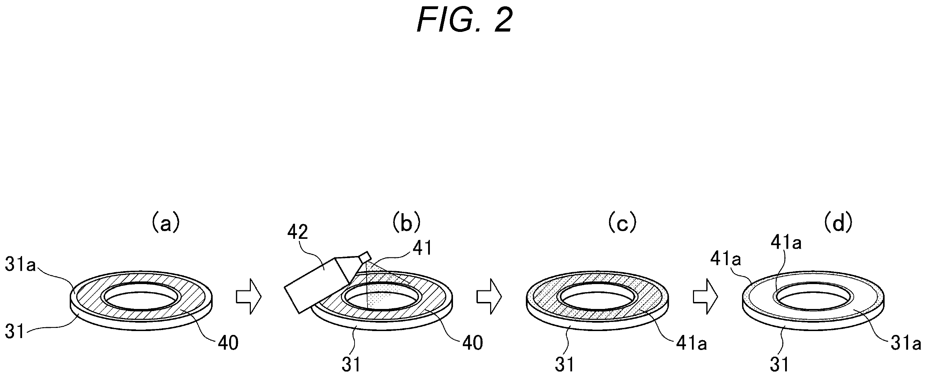

As a method of the oil repellent treatment, for example, the processes shown in Section (a) to Section (d) of FIG. 2 are performed.

First, as shown in Section (a) of FIG. 2, an annular masking tape 40 is caused to adhere onto each of the raceway surface 31a of the stationary bearing ring 31 and the raceway surface 32a of the rotating bearing ring 32. It is to be noted that FIG. 2 shows only the raceway surface 31a of the stationary bearing ring 31 for convenience of explanation. The width of the masking tape 40 may equal to or slightly longer than a total length of the needle rollers 33. By causing the masking tape 40 to adhere, only an outer peripheral portion (the radially outer side from the portion of the raceway surface 31a in contact with the needle rollers 33) and an inner peripheral portion (the radially inner side from the portion of the raceway surface 31a in contact with the needle rollers 33) of the raceway surface 31a are exposed.

Next, as shown in Section (b) of FIG. 2, an entire surface of the raceway surface 31a including the portion covered with the masking tape 40 is uniformly coated with an oil repellent liquid 41. Examples of the method for applying the oil repellent liquid 41 include spray coating using a spray 42, roller coating, and the like.

The oil repellent liquid 41 contains an oil repellent agent, a solvent, a binder, and the like. The oil repellent liquid 41 forms an oil repellent film 41a on the raceway surfaces 31a and 32a after drying, as will be described below. Examples of the suitable oil repellent agent include fluorine-based surfactants, fluorine-based silane coupling agents, fluorine-based polymers, and the like. In addition, in order to improve coating properties, these may be dissolved in a solvent, or a binder may be used in combination.

Subsequently, as shown in Section (c) of FIG. 2, by drying the applied oil repellent liquid 41, the oil repellent film 41a is formed on the raceway surface 31a. Drying may be performed at room temperature, but may be performed with heating as necessary.

After drying, as shown in Section (d) of FIG. 2, by peeling off the adhered masking tape 40, the oil repellent film 41a remains on each of the outer peripheral portion and the inner peripheral portion of the raceway surface 31a, and the stationary bearing ring 31 is obtained, in which the raceway surface 31a is exposed at a radial center portion corresponding to the width of the masking tape 40 interposed between the two peripheral portions.

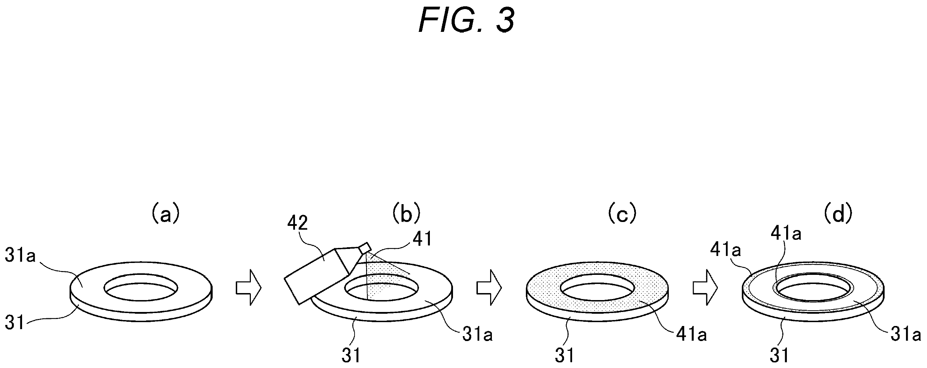

As a method of the oil repellent treatment, according to an embodiment of the present invention, the processes shown in Section (a) to Section(d) of FIG. 3 are performed.

First, as shown in Section (a) and Section(b) of FIG. 3, the stationary bearing ring 31 is prepared, and the entire surface of the raceway surface 31a is uniformly coated with the oil repellent liquid 41 with the sprayer 42, for example.

Next, as shown in Section (c) of FIG. 3, by drying the applied oil repellent liquid 41, the oil repellent film 41a is formed on the entire surface of the raceway surface 31a.

In addition, regarding the oil repellent film 41a formed on the entire surface of the raceway surface 31a, as will be described below, the oil repellent film 41a on the portion of the raceway surface 31a in contact with the needle rollers is peeled off by rotating the bearing, and it is sufficient if the oil repellent agent or the like that is peeled off at that time does not act as a foreign substance and the hardness of the constituent components (oil repellent agent, etc.) of the oil repellent liquid 41 is sufficiently lower than the hardness of the bearing rings 31 and 32 and the needle rollers 33. Examples of the suitable oil repellent agent for achieving the object described above include the fluorine-based surfactants, fluorine-based silane coupling agents, fluorine-based polymers, and the like described above.

Subsequently, although not illustrated, the thrust needle roller bearing is assembled using a cage incorporating needle rollers, the stationary bearing ring 31 with the oil repellent film 41a formed as described above, and the rotating bearing ring 32 with the oil repellent film 41a formed in the same manner. Then, a predetermined lubricating oil is applied to the needle rollers, and a predetermined load is applied to rotate the bearing.

After a predetermined time elapses, the rotation is stopped and then, by washing the bearing with oil, a bearing ring is obtained, in which the oil repellent film 41a is not formed on the portion of the raceway surface (the raceway surface 31a of the stationary bearing ring 31 in FIG. 3) in contact with the needle rollers, and the oil repellent film 41a is formed on each of the outer peripheral portion and the inner peripheral portion of the raceway surface, as shown in Section (d) of FIG. 3.

The examples of the method of the oil repellent treatment have been described above.

In the thrust needle roller bearing 30 obtained as described above, since the portions of the annular raceway surfaces 31a and 32a of the bearing rings 31 and 32 other than the portion in contact with the needle rollers 33 are subjected to the oil repellent treatment and thus have the oil repellent film 41a, even when the lubricating oil held between the raceway surfaces 31a and 32a and the needle rollers 33 tends to move to the outside of the bearing due to centrifugal force, for example, the lubricating oil can be blocked by the portions subjected to the oil repellent treatment (that is, the portions on which the oil repellent film 41a is formed), and prevented from moving further. Therefore, even in the thrust needle roller bearing 30 with a reduced amount of oil, a sufficient amount of oil is held, and seizure can be effectively prevented.

In the embodiment described above, although it is illustrated that both the radially outer portion and the radially inner portion from the portions of the raceway surfaces 31a and 32a in contact with the needle rollers 33 are subjected to the oil repellent treatment, at least one of the radially outer portion and the radially inner portion may be subjected to the oil repellent treatment.

In addition, as the thrust needle roller bearing 30 is rotated, the lubricating oil held between the raceway surfaces 31a and 32a and the needle rollers 33 is more likely to move more radially outward than radially inward due to centrifugal force, and accordingly, in order to effectively prevent the lubricating oil from flowing to the outside of the bearing, it is preferable that at least the radially outer side be subjected to the oil repellent treatment. However, in order to effectively prevent the lubricating oil from flowing to the radially inner side, it is more preferable that both the radially outer portion and the radially inner portion be subjected to the oil repellent treatment.

Meanwhile, the configuration of the thrust needle roller bearing 30 itself is not limited, and for example, the raceway surface of the needle rollers 33 may be crowned. Further, as described in JP2008-261476A, for example, the portion of the raceway surfaces 31a and 32a in contact with the needle rollers 33 may have a convex shape with a curved surface. Furthermore, flanges (collars) extending in an axial direction orthogonal to the raceway surfaces 31a and 32a may be provided on the outer diameter side of the bearing rings 31 and 32, and, particularly, providing the flange on the radially outer side of the rotating bearing ring 32 allows to more effectively prevent the lubricating oil from moving to the outside due to centrifugal force.

Further, the cage 34 may be formed by molding, combining, and caulking two plate materials to hold the needle rollers 33, or may be formed by molding one plate material in an M shape to hold the needle rollers 33 at a portion having an M-shaped cross section. Furthermore, the cage 34 may be made of steel or synthetic resin.

The lubricating oil is also not particularly limited, and commonly used lubricating oil may be used.

### EXAMPLES

Hereinafter, the present invention will be described in more detail with reference to Examples, but the present invention is not limited thereto.

### <Example 1>

As an Example product, a thrust needle roller bearing having a bearing ring with an oil repellent film formed on a raceway surface was prepared, and as a Comparative Example product, a thrust needle roller bearing having a bearing ring of which raceway surface was not subjected to oil repellent treatment was prepared, and the seizure test was performed on each thrust needle roller bearing.

### (Preparation of Test Bearings)

Thrust needle roller bearings shown below were prepared.
· Cage and needle rollers: FNTA-2542 (manufactured by NSK Ltd.)
· Bearing ring: FTRA-2542 (manufactured by NSK Ltd.)
· Bearing ring: 2 pieces
· Bearing ring material: SK85 (carbon tool steel material: JIS standard)
· Cage material: SPCC (cold-rolled steel plate)
· Needle roller material: SUJ2 (high carbon chromium bearing steel)

The cage was configured with two cage members formed in an annular plate shape and assembled integrally, by pressing a steel plate. In addition, the cage includes pockets formed radially in the circumferential direction of a main body of one cage member, and pockets formed radially in the circumferential direction of a main body of the other cage member, and the needle rollers are interposed between the two pockets so as to be rollably held. In addition, for the bearing ring, a bearing ring that is formed in an annular shape and has no flange, collar, or the like was used.

Then, according to the process shown in FIG. 3, the raceway surface of the bearing ring was subjected to a predetermined oil repellent treatment. First, after degreasing the bearing ring with an organic solvent, an oil repellent liquid A containing polytetrafluoroethylene (PTFE) and a cellulose-based binder was uniformly applied to the entire surface of the bearing ring with a spray (Section (b) of FIG. 3). The oil repellent liquid A was NEW TFE COAT (manufactured by Fine Chemical Japan Co., Ltd.). Then, drying is performed at room temperature (25°C) for 2 hours (Section (c) of FIG. 3). Then, of the oil repellent film formed on the entire surface of the raceway surface of the bearing ring, a portion in contact with the needle rollers was removed by the following procedure (Section (d) of FIG. 3).

First, using the bearing ring and the cage incorporating the needle rollers as a test bearing, the test bearing was installed in a test machine housing, and 1 ml of additive-free ISO-VG32 turbine oil was applied to the test bearing. Then, the test machine housing provided with the test bearing was installed in the test machine. Then, a load of 150 kgf was applied, and a rotational speed was 3,000 rpm for 10 seconds. After stopping the rotation, the test bearing was taken out and washed with heptane.

### (Seizure Test)

After degreasing and washing with heptane, the thrust needle roller bearings as the Example product and the Comparative Example product were incorporated into the housing, and then a load was applied to start rotation. The test condition is as follows, and reproduces an environment in which the supply of lubricating oil is interrupted. After the start of rotation, when the bearing torque exceeded five times the initial value, it was determined that "seizure occurred", and the test was stopped.

### [Test Condition]

· Lubricating oil type: additive-free ISO-VG32 turbine oil
· Amount of lubricating oil: 1 ml (initial supply only)
· Load: 150 kgf
· Rotational speed: 3,000 rpm
· Temperature: Room temperature (25°C)

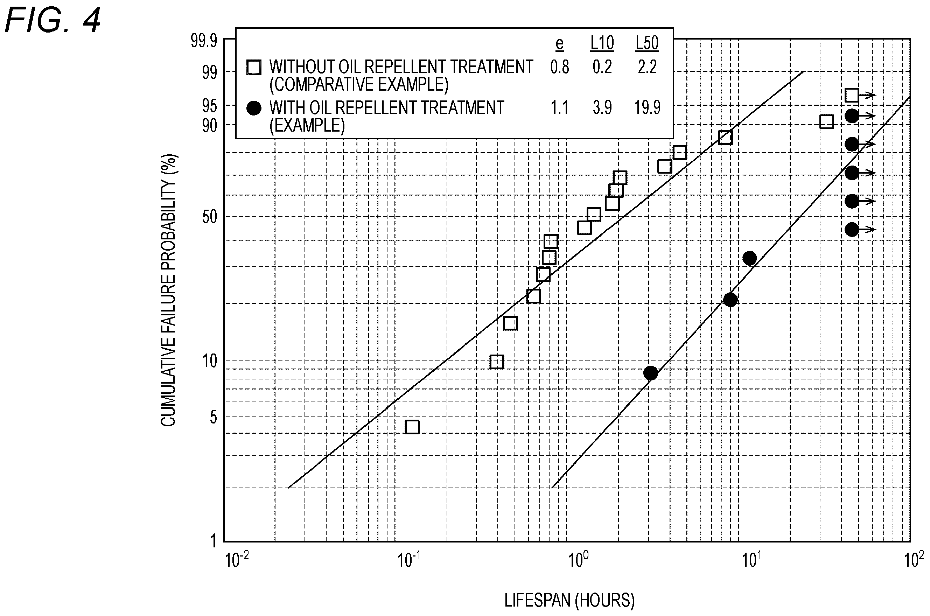

FIG. 4 shows the test results of thrust needle roller bearings according to the Example product and the Comparative Example product in Example 1. It is to be noted that, in FIG. 4, the cumulative failure probability (%) versus lifespan (period of time: hours) is plotted for each of the Example product and the Comparative Example product (Weibull plot).

In FIG. 4, the data indicated by "•" represents that the oil repellent treatment is applied (Example), and the data indicated by "□" represents that the oil repellent treatment is not applied (Comparative Example).

In addition, in FIG. 4, "→" shown on the right side of a part of the plot of "•" or "□" represents that seizure did not occur for the corresponding period of time, so the test was interrupted (discontinued) for the period of time.

Meanings of "e", "L10" and "L50" shown in FIG. 4 are as follows, respectively.

"e": It is an index representing the variation in lifespan, and as the variation in the lifespan data decreases, this value increases.

"L10": It represents the period of time (or total number of revolutions, etc.) during which 90% of the bearings can rotate without causing damage due to rolling fatigue, and ISO defines L10 as the "rated lifespan of rolling bearings".

"L50": It represents the period of time (or total number of revolutions, etc.) during which 50% of the bearings can rotate without causing damage due to rolling fatigue. L10 may decrease in accuracy when there is little lifespan data or when the lifespan data varies greatly, and in this case, L50 data may be used to compare lifespans.

As shown in FIG. 4, according to a comparison of the "e" value with oil repellent treatment (Example), that is, 1.1, and the "e" value without oil repellent treatment (Comparative Example), that is, 0.8, the difference in the degree of variation in the lifespan data is small, that is, the inclinations of the Weibull slopes are similar and do not cross, and accordingly, the lifespan can be compared using the L10 data in this test example.

Then, according to a comparison of the "L10" value with oil repellent treatment (Example), that is, 3.9, and the "L10" value without oil repellent treatment (Comparative Example), that is, 0.2, the Example product subjected to the predetermined oil repellent treatment showed a lifespan ten times longer than the Comparative Example product not subjected to the oil repellent treatment.

### <Example 2>

As an Example product, a thrust needle roller bearing having a bearing ring with an oil repellent film formed on the raceway surface was prepared by a method different from that of Example 1, and as a Comparative Example product, a thrust needle roller bearing having a bearing ring of which raceway surface was not subjected to oil repellent treatment was prepared, and the seizure test was performed on each thrust needle roller bearing.

### (Preparation of Test Bearings)

Using the same thrust needle roller bearing as in Example 1, the raceway surface of the bearing ring was subjected to oil repellent treatment according to the processes shown in FIG. 2. First, a masking tape was caused to adhere onto the ring with a width of 6.0 mm with respect to the total length of 5.6 mm of the needle roller (Section (a) of FIG. 2). Next, the entire surface of the raceway surface was uniformly coated with an oil repellent liquid (Section (b) of FIG. 2), and then the applied oil repellent liquid was dried at room temperature (25°C) for 2 hours (Section (c) of FIG. 2). Then, after the oil repellent liquid was dried, the adhered masking tape was peeled off (Section (d) of FIG. 2).

### (Seizure Test)

As an Example product, a thrust needle roller bearing incorporating a bearing ring with an oil repellent film formed on the raceway surface by using the oil repellent liquid A and the method described above was prepared, and as a Comparative Example product, a thrust needle roller bearing incorporating a bearing ring of which raceway surface was not subjected to oil repellent treatment was prepared. Then, the seizure test was performed under the same conditions as in Example 1.

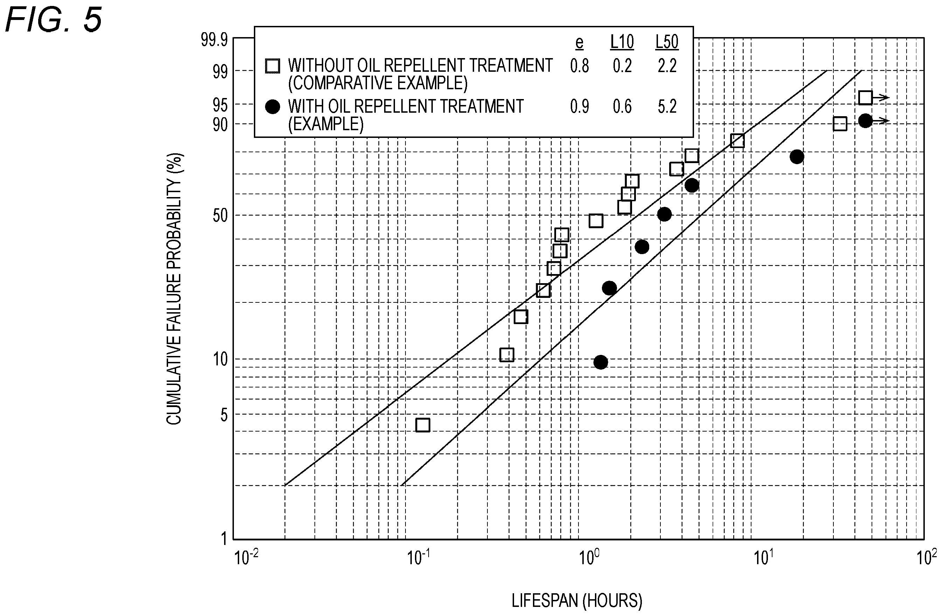

FIG. 5 shows the test results of thrust needle roller bearings according to the Example product and the Comparative Example product in Example 2. It is to be noted that, in FIG. 5 as well as in FIG. 4, the cumulative failure probability (%) versus lifespan (period of time: hours) is plotted for each of the Example product and the Comparative Example product (Weibull plot).

In addition, the meanings of "•", "□", "→", "e", "L10" and "L50" in FIG. 5 are the same as those described in Example 1.

As shown in FIG. 5, as in Example 1, according to a comparison of the "e" value with oil repellent treatment (Example), that is, 0.9, and the "e" value without oil repellent treatment (Comparative Example), that is, 0.8, the difference in the degree of variation in the lifespan data is small, that is, the inclinations of the Weibull slopes are similar and do not cross, and accordingly, the lifespan can be compared using the L10 data in this test example as well.

Then, according to a comparison of the "L10" value with oil repellent treatment (Example), that is, 0.6, and the "L10" value without oil repellent treatment (Comparative Example), that is, 0.2, the Example product subjected to the predetermined oil repellent treatment showed about three times the lifespan of the Comparative Example product not subjected to the oil repellent treatment.

As described above, Example 2 differs from Example 1 in the method of removing the oil repellent film from the portion of the raceway surface in contact with the needle roller. From the results of Examples 1 and 2, in the seizure test at room temperature (25°C) on the oil repellent film using the oil repellent liquid A, an extremely excellent lifespan was observed regardless of the method of removal.

### <Example 3>

Thrust needle roller bearings each having a bearing ring with an oil repellent film formed on the raceway surface were prepared in the same manner as in Example 1 above, and the seizure test was performed on each thrust needle roller bearing. However, in Example 3, oil repellent films with various film thicknesses were formed on the bearing rings by changing the number of oil repellent treatments.

### (Preparation of Test Bearings)

Using the same thrust needle roller bearing as in Example 1, the raceway surface of the bearing ring was subjected to oil repellent treatment according to the processes shown in FIG. 2. First, after degreasing the bearing ring with an organic solvent, a masking tape was caused to adhere onto the ring with a width of 6.0 mm with respect to the total length of 5.6 mm of the needle roller (Section (a) of FIG. 2). Next, an oil repellent liquid B containing polytetrafluoroethylene (PTFE) and a thermosetting resin was uniformly applied to the entire surface of the bearing ring with a spray (Section (b) of FIG. 2) and dried at room temperature (25°C) for 2 hours (Section (c) of FIG. 2). The oil repellent liquid B was FINE HEAT RESISTANT TFE COAT (manufactured by Fine Chemical Japan Co., Ltd.). Then, the thermosetting resin was heated at 200°C for 20 minutes so as to be cured. Then, the adhered masking tape was peeled off (Section (d) of FIG. 2).

For the test material to be subjected to oil repellent treatment four times, in the same manner as the above method, the process of applying the oil repellent liquid to the entire surface of the bearing ring to which the masking tape was attached and the process of drying and heating the applied oil repellent liquid were repeated four times in total, and then the masking tape was peeled off (Section (d) of FIG. 2).

As a result of measuring the film thickness at four points on the test material subjected to oil repellent treatment one time, the average film thickness was about 2.0 µm. In addition, as a result of similarly measuring the film thickness at four points on the test material subjected to oil repellent treatment four times, the average film thickness was about 9.3 µm. In addition, in Example 3, six test materials subjected to oil repellent treatment one time and six test materials subjected to oil repellent treatment four times were prepared, respectively, and these test materials were used to prepare bearings.

### (Seizure Test)

With the bearings using the test material subjected to oil repellent treatment one time (Bearing Nos. 1 to 6) and the bearings using the test material subjected to oil repellent treatment four times (Bearing Nos. 7 to 12), the seizure test was performed under the test condition shown below by using the same method as in Example 1 described above. In addition, in the test condition shown below, the difference from Examples 1 and 2 described above lies in the test temperature, and in Example 3, the test temperature was set to 100°C.

### [Test Condition]

· Lubricating oil type: additive-free ISO-VG32 turbine oil
· Amount of lubricating oil: 1 ml (initial supply only)
· Load: 150 kgf
· Rotational speed: 3,000 rpm
· Temperature: 100°C (housing heating)

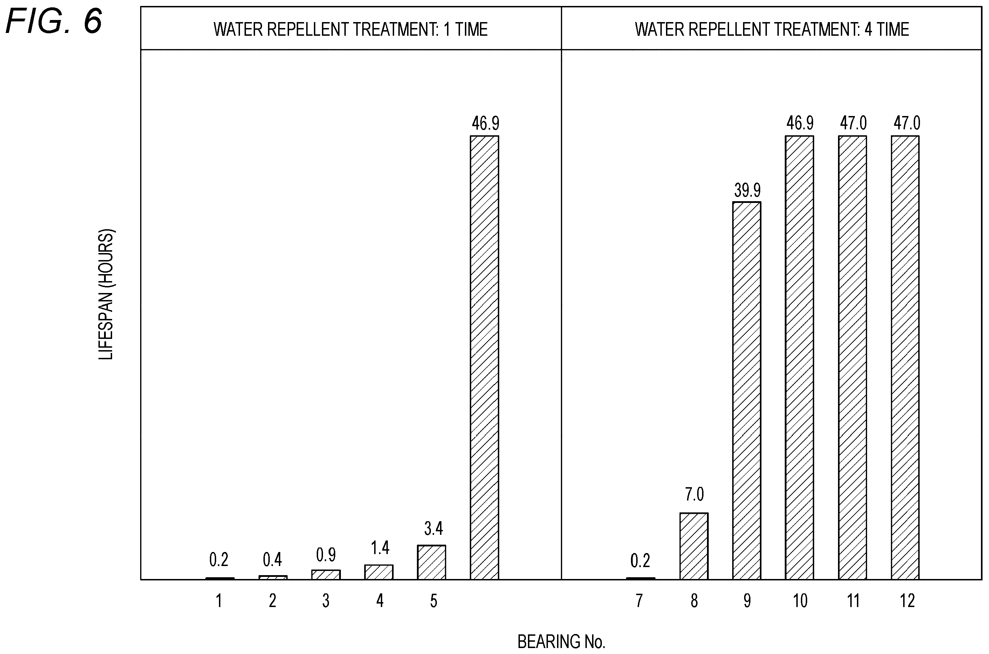

FIG. 6 is a graph showing a lifespan of each bearing. The numerical values described above each bar graph are the lifespan (hours) of each bearing. As shown in FIG. 6, Bearing Nos. 7 to 12 subjected to oil repellent treatment four times had a longer lifespan than Bearing Nos. 1 to 6 subjected to oil repellent treatment one time.

In Example 3 above, the oil repellent liquid was different from those of Examples 1 and 2, and the temperature of the seizure test was set to 100°C, so it can be said that the seizure test was performed under severe conditions. Even under such conditions, when the oil repellent liquid B was used, an excellent lifespan was observed.

### <Example 4>

For the bearing rings with the oil repellent films formed on the raceway surfaces in the same manner as in Example 2 described above, a contact angle with turbine oil was measured, thrust needle roller bearings having the obtained bearing rings were prepared, and the seizure test was performed on each thrust needle roller bearing. However, in Example 4, oil repellent films with various different components were formed on the bearing ring by changing the type of oil repellent liquid.

### (Preparation of Test Bearings)

Using the same thrust needle roller bearing as in Example 1, the raceway surface of the bearing ring was subjected to oil repellent treatment according to the processes shown in FIG. 2. The types of oil repellent liquids used are shown below. In addition, when forming the oil repellent film, the test material using the oil repellent liquid A was not subjected to the baking treatment, the test material using the oil repellent liquid B was heated at 200°C for 20 minutes, and the test material using an oil repellent liquid C was heated at 100°C for 25 minutes. Further, in Example 4, five test materials subjected to oil repellent treatment were prepared for each type of oil repellent liquid, and nine test materials not subjected to oil repellent treatment were prepared.

### [Type of Oil Repellent Liquid]

Oil repellent liquid A: NEW TFE COAT (manufactured by Fine Chemical Japan Co., Ltd.)
Oil-repellent liquid B: FINE HEAT RESISTANT TFE COAT (manufactured by Fine Chemical Japan Co., Ltd.)
Oil-repellent liquid C: Novec 1720 (manufactured by 3M Japan Limited)

### (Measurement of Contact Angle)

By dropping additive-free VG32 turbine oil (VG32 turbine oil) onto the surface of each of the obtained test materials that was subjected to oil repellent treatment, the contact angle was measured and the average contact angle for each oil repellent liquid was calculated. Likewise, by dropping VG32 turbine oil on the raceway surfaces of test materials (SK85 discs) that were not subjected to oil repellent treatment, the contact angles with respect to nine test materials were measured and the average contact angle was calculated. In addition, the average contact angle is a value obtained by measuring the contact angle zero (0) seconds after droplets of additive-free VG32 turbine oil (VG32 turbine oil) were landed on the surface subjected to oil repellent treatment, repeating this measurement three times, and calculating the average. The types of oil repellent liquids and average contact angles are shown below.

### [Average Contact Angle]

Test material using oil repellent liquid A: 33.7°
Test material using oil repellent liquid B: 44.9°
Test material using oil repellent liquid C: 70.5°
Test material not subjected to oil repellent treatment: 16.0°

Comparing the average contact angles described above, regardless of the type of oil repellent liquid, the test material immediately after the oil repellent treatment had a larger average contact angle than the test material not subjected to the oil repellent treatment, indicating that excellent oil repellency performance was obtained.

### (Seizure Test)

Test materials (bearing rings) using various oil repellent liquids were assembled only on the stationary ring side, five thrust needle roller bearings were prepared for each oil repellent liquid, nine thrust needle roller bearings were prepared using test materials (bearing rings) not subjected to oil repellent treatment, and the seizure test was performed on each bearing using the same method and condition as in Example 3 described above.

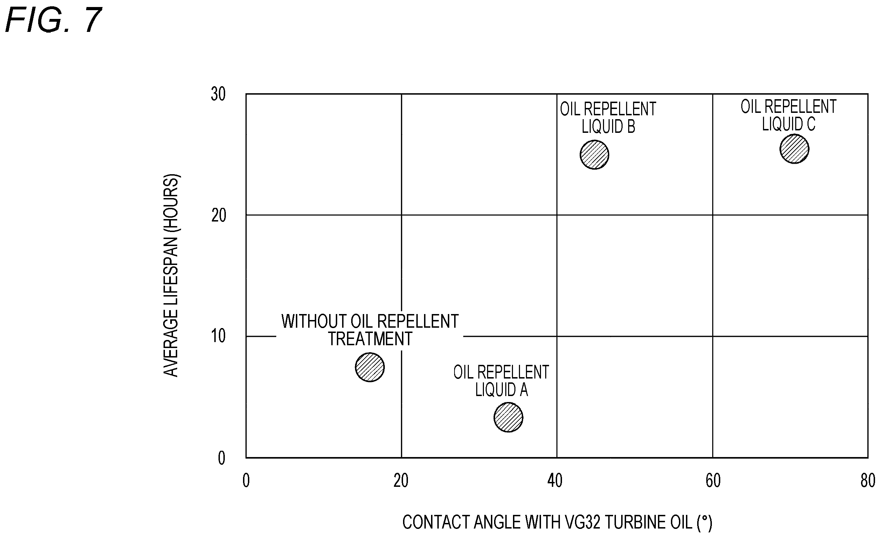

FIG. 7 is a graph showing an average lifespan of each test material, with the average lifespan plotted on the vertical axis and an average contact angle with VG32 turbine oil plotted on the horizontal axis. In addition, "Oil Repellent Liquid A", "Oil Repellent Liquid B", and "Oil Repellent Liquid C" shown in FIG. 7 indicate the average lifespan of five bearings using each oil repellent liquid. "Without Oil Repellent Treatment" shown in FIG. 7 indicates the average lifespan of nine bearings prepared using test materials not subjected to oil repellent treatment. As shown in FIG. 7, the lifespan of the bearing using the test material subjected to oil repellent treatment with the oil repellent liquid A is shorter than that of the bearing not subjected to oil repellent treatment. It is considered that this is because the heat resistance of the components of the oil repellent liquid A is low. On the other hand, the bearings using test materials subjected to oil repellent treatment with the oil repellent liquid B and the oil repellent liquid C had a significantly longer lifespan than the bearings not subjected to oil repellent treatment. From this result, it was shown that the oil repellent liquid B and the oil repellent liquid C are excellent in heat resistance, and can maintain an excellent oil repellent effect even when the temperature of the seizure test is set to 100°C.

Further, when forming the oil repellent film using the oil repellent liquid B and the oil repellent liquid C, baking treatment was performed at 100°C or 200°C in order to cure the resin in the oil repellent liquid, but when forming the oil repellent film using the oil repellent liquid A, the baking treatment is not required, and the amount of CO₂ emitted during the formation of the oil repellent film can be reduced. Therefore, it is preferable to appropriately select the type of oil repellent liquid to use according to the environment in which the bearing is used.

In addition, as shown in FIG. 7, when the seizure test was performed at 100°C, comparing the oil repellent liquid B and oil repellent liquid C with heat resistance showed that the lifespan increases as the average contact angle increases.

Although various embodiments have been described above with reference to the drawings, it goes without saying that the present invention is not limited to such examples but by the scope of the appended claim.

Note that this application is based on a Japanese Patent Application (Japanese Patent Application No. 2021-025449) filed on February 19, 2021 and Japanese Patent Application (Japanese Patent Application No. 2022-010302) filed on January 26, 2022.

### REFERENCE SIGNS LIST

30: thrust needle roller bearing
31: stationary bearing ring
31a: raceway surface
32: rotating bearing ring
32a: raceway surface
33: needle roller
34: cage
40: masking tape
41: oil repellent liquid
41a: oil repellent film
42: spray

## Claims

1. A method of applying an oil repellent treatment to a thrust needle roller bearing (30) including: a plurality of needle rollers (33); a bearing ring (31, 32) having an annular raceway surface (31a, 32a) on which the needle rollers (33) roll; and a cage (34) that rollably holds the needle rollers (33), the method comprising
applying the oil repellent liquid on an entire surface of the raceway surface (31a, 32a); drying the applied oil repellent liquid to form an oil repellent film on the entire surface of the raceway surface (31a, 32a);
assembling the thrust needle roller bearing (30) by using the bearing ring (31, 32) having the raceway surface (31a, 32a) on which the oil repellent film is formed and the needle rollers (33); and
peeling off the oil repellent film on the portion of the raceway surface (31a, 32a) in contact with the needle rollers (33) by rotating the thrust needle roller bearing (30); wherein a predetermined lubricating oil is applied to the needle rollers (33), and a predetermined load is applied to rotate the thrust needle roller bearing (30); and
after a predetermined time elapses, the rotation is stopped, and by washing the thrust needle roller bearing (30) with oil, the bearing ring (31, 32) is obtained, in which the oil repellent film is not formed on the portion of the raceway surface (31a, 32a) in contact with the needle rollers (33).

## Patentansprüche

1. Verfahren zum Anwenden einer ölabweisenden Behandlung bei einem Axial-Nadelkranzlager (30), das aufweist:
eine Vielzahl von Nadelrollen (33); einen Lagerring (31, 32) mit einer ringförmigen Laufbahnfläche (31a, 32a), auf der die Nadelrollen (33) abrollen; sowie einen Käfig (34), der die Nadelrollen (33) so hält, dass sie rollen können, wobei das Verfahren umfasst:
Aufbringen der ölabweisenden Flüssigkeit auf eine gesamte Oberfläche der Laufbahnfläche (31a, 32a);
Trocknen der ölabweisenden Flüssigkeit, um einen ölabweisenden Film auf der gesamten Oberfläche der Laufbahnfläche (31a, 32a) auszubilden;
Zusammensetzen des Axial-Nadelkranzlagers (30) unter Einsatz des Lagerrings (31, 32) mit der Laufbahnfläche (31a, 32a), auf der der ölabweisende Film ausgebildet ist, sowie der Nadelrollen (33); sowie
Abziehen des ölabweisenden Films auf dem Abschnitt der Laufbahnfläche (31a, 32a), der in Kontakt mit den Nadelrollen (33) ist, durch Drehen des Axial-Nadelkranzlagers (30); wobei ein vorgegebenes Schmieröl auf die Nadelrollen (33) aufgebracht wird, und eine vorgegebene Last zum Drehen des Axial-Nadelkranzlagers (30) aufgebracht wird; und
nachdem eine vorgegebene Zeit verstrichen ist, die Drehung gestoppt wird und durch Waschen des Axial-Nadelkranzlagers (30) mit Öl der Lagerring (31, 32) geschaffen wird, bei dem der ölabweisende Film nicht auf dem Abschnitt der Laufbahnfläche (31a, 32a) ausgebildet ist, der in Kontakt mit den Nadelrollen (33) ist.

## Revendications

1. Procédé d'application d'un traitement oléofuge sur une butée axiale à aiguilles (30) comportant une pluralité d'aiguilles (33) ; une bague de butée (31, 32) ayant une surface de roulement annulaire (31a, 32a) sur laquelle roulent les aiguilles (33) ; et une cage (34) qui contient les aiguilles (33) de manière roulante, le procédé comprenant :
l'application du liquide oléofuge sur une surface entière de la surface de roulement (31a, 32a) ;
le séchage du liquide oléofuge appliqué afin de former un film oléofuge sur la surface entière de la surface de roulement (31a, 32a) ;
l'assemblage de la butée axiale à aiguilles (30) en utilisant la bague de butée (31, 32) ayant la surface de roulement (31a, 32a) sur laquelle est formée le film oléofuge, et les rouleaux à aiguilles (33) ; et
l'élimination par pelage du film oléofuge sur la partie de la surface de roulement (31a, 32a) en contact avec les aiguilles (33) par rotation de la butée axiale à aiguilles (30) ; dans lequel
une huile lubrifiante prédéfinie est appliquée sur les aiguilles (33), et une charge prédéfinie est appliquée pour faire tourner la butée axiale à aiguilles (30) ; et après qu'un laps de temps prédéfini s'est écoulé, la rotation est arrêtée, et par lavage de la butée à aiguilles (30) avec de l'huile, on obtient la bague de butée (31, 32), dans lequel le film oléofuge n'est pas formé sur la partie de la surface de roulement (32a) en contact avec les aiguilles.
